# EUROPEAN PATENT APPLICATION

(11) **EP 3 495 966 A1**
(43) Date of publication of application: **12.06.2019**
(21) Application number: 18207225.6
(22) Date of filing: 20.11.2018
(51) Int. Cl.: G06F 16/84

(54) **DECISION PROGRAM, DECISION APPARATUS AND DECISION METHOD**

(30) Priority: 08.12.2017 JP 2017236065
(71) Applicant: FUJITSU LIMITED, Kanagawa 211-8588 (JP)
(72) Inventor: Washio, Suguru, Kanagawa, 211-8588 (JP)
(74) Representative: Hoffmann Eitle

(57) **Abstract**

A decision method for specifying an association relationship between attributes included in different documents is disclosed. The method includes: accepting a first attribute relating to items included in a first document and a second attribute relating to items included in a second document; specifying a first item associated with the accepted first attribute and a second item associated with the accepted second attribute; specifying a third item having a specific relationship to the specified first item and a fourth item having a specific relationship to the specified second item; and deciding, based on consistency between the specified third item and the specified fourth item, whether or not the first attribute is associated with the second attribute.

## Description

### FIELD

The embodiment discussed herein relates to a decision program, a decision apparatus and a decision method.

### BACKGROUND

In recent years, in order to make it possible to smoothly distribute financial information of financial statements and so forth, an extensible business reporting language (XBRL) document (hereinafter referred to also as document) for which XBRL that is a language based on the standard of extensible markup language (XML) is used is generated.

This XBRL document is configured from a concept of an instance and a taxonomy, and all financial information to be disclosed is set as instances and taxonomies. In an XBRL document, for example, financial information itself (hereinafter referred to also as item) such as amounts of sales or operating profits is set as an instance, and a definition element such as a display structure or a display method is set as taxonomy (for example, refer to Japanese Laid-open Patent Publication No. 2007-164591, Japanese Laid-open Patent Publication No. 2011-076557 and Japanese Laid-open Patent Publication No. 2005-043932).

An instance that constitutes such an XBRL document as described above includes, in addition to various items, a context (hereinafter referred to sometimes simply as attribute) that is information that is referred to from the items and is indicative of company information, a reporting year and so forth.

Here, there is the possibility that the information included in each context may be changed at any time in response to a reporting year of financial information or the like. Therefore, for example, in the case where comparison of financial information in different reporting years is performed, a worker specifies an association relationship of a context between different reporting years in advance. For example, in this case, the worker refers to identification information included in the contexts (such identification information is hereinafter referred to also as context identification (ID)) to perform association of the contexts.

However, contexts for which such association is to be performed sometimes include a context whose context ID has been changed. Therefore, in this case, it is difficult for the worker to perform association of the contexts by reference to the context IDs.

Therefore, the worker performs association of contexts, for example, based on a similarity relationship of the substance between different pieces of information included in the contexts. Consequently, the worker may perform association of contexts even if there exists a context whose context ID has been changed.

However, each context for which association is to be performed sometimes includes a plurality of contexts that include information similar in the substance to each other. Therefore, in this case, it is difficult for the worker to perform association of the contexts by referring to a similarity relationship of information included in the contexts.

Further, in the case where association of contexts is performed by manual operation, depending upon the substance of the change of the information included in the contexts, the operation burden on the worker required for association of the contexts becomes enormous.

Therefore, it is desirable to provide a decision program, a decision apparatus and a decision method capable of specifying an association relationship between attributes included in documents different from each other.

### SUMMARY

According to an aspect of the embodiments, a decision method performed by a computer, the method includes: accepting a first attribute relating to items included in a first document and a second attribute relating to items included in a second document; specifying a first item associated with the accepted first attribute and a second item associated with the accepted second attribute by referring to a storage in which information that associates information that specifies the items included in the first document with an attribute relating to the items included in the first document and information that associates information that specifies the items included in the second document with an attribute relating to the items in the second document are stored; specifying a third item having a specific relationship to the specified first item and a fourth item having a specific relationship to the specified second item by referring to a storage in which information indicative of a relationship between the items included in the first document and information indicative of a relationship between the items included in the second document are stored; and deciding, based on consistency between the specified third item and the specified fourth item, whether or not the first attribute is associated with the second attribute.

### BRIEF DESCRIPTION OF DRAWINGS

FIG. 1 depicts an example of a configuration of an information processing system;
FIGs. 2 to 7D depict particular examples of document information;
FIG. 8 depicts a hardware configuration of an information processing apparatus;
FIG. 9 depicts functional blocks of an information processing apparatus;
FIG. 10 depicts a flow chart illustrating an outline of a decision process according to a first embodiment;
FIGs. 11 and 12 depict an outline of the decision process according to the first embodiment;
FIGs. 13 to 17 depict flow charts illustrating details of the decision process according to the first embodiment;
FIGs. 18A and 18B depict a particular example of context information;
FIGs. 19A and 19B depict a particular example of item information;
FIGs. 20 and 21 depict particular examples of taxonomy information;
FIGs. 22 and 23 depict particular examples of match information;
FIG. 24 depicts a particular example of map information;
FIG. 25 depicts a different particular example of match information;
FIG. 26 depicts a particular example of setting information; and
FIGs. 27, 28 and 29 depict further different particular examples of match information.

### DESCRIPTION OF EMBODIMENTS

### [Configuration of Information Processing System]

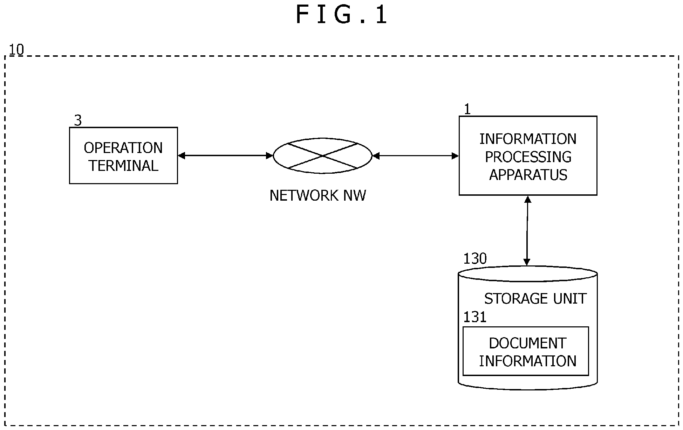

FIG. 1 depicts a configuration of an information processing system. The information processing system 10 depicted in FIG. 1 includes, for example, an information processing apparatus 1 (hereinafter referred to also as decision apparatus 1), a storage unit 130 and an operation terminal 3. The operation terminal 3 depicted in FIG. 1 is coupled to the information processing apparatus 1 through a network NW such as the Internet.

The operation terminal 3 is a terminal that is used, for example, by a worker. For example, the worker inputs an XBRL document 131 (hereinafter referred to also as document information 131) constituted from instances and taxonomies through the operation terminal 3.

The information processing apparatus 1 stores the document information 131 inputted from the operation terminal 3 into the storage unit 130. For example, the information processing apparatus 1 stores the document information 131 of each reporting year in a sorted state into the storage unit 130.

Then, the information processing apparatus 1 performs, for example, a process of referring to the document information 131 stored in the storage unit 130 and deciding whether or not contexts included in instances constituting the document information 131 of different reporting years are associated with each other (such process is hereinafter referred to also as decision process). In the following, a particular example of the document information 131 is described.

### [Particular Example of Document Information]

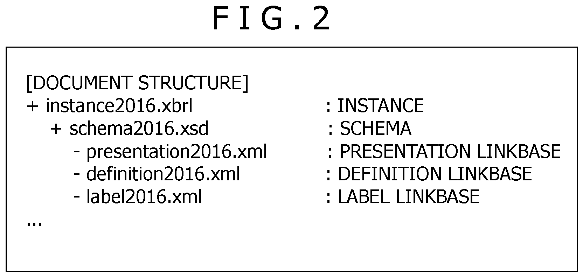

FIGs. 2 to 7D are views illustrating particular examples of document information. The document information here may be the document information 131 depicted in FIG. 1. It is to be noted that the following description is given assuming that first document information 131a and second document information 131b (that is document information 131 corresponding to a reporting year newer than that of the first document information 131a) are stored in the storage unit 130. Further, the following description is given assuming that a taxonomy constituting the first document information 131a and the second document information 131b includes a schema, a presentation linkbase, a definition linkbase and a label linkbase.

[Particular Example of Document Structure in Document Information]

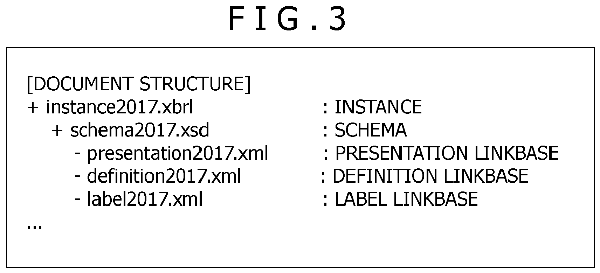

First, particular examples of a document structure in the document information 131 are described. FIG. 2 is a view illustrating a particular example of a document structure in the first document information 131a, and FIG. 3 is a view illustrating a particular example of a document structure in the second document information 131b.

The document structure of the first document information 131a depicted in FIG. 2 indicates that a file corresponding to an instance (file whose file name is "instance2016.xbrl") is a file that is referred to from a file corresponding to a schema (a file whose file name is "schema2016.xsd").

Further, the document structure of the first document information 131a depicted in FIG. 2 indicates that a file corresponding to the schema is a file that is referred to from a file corresponding to the presentation linkbase (file whose file name is "presentation2016.xml"), a file corresponding to the definition linkbase (file whose file name is "definition2016.xml") and a file corresponding to the label linkbase (file whose file name is "label2016.xml").

Meanwhile, the document structure of the second document information 131b depicted in FIG. 3 indicates that a file corresponding to the instance (file whose file name is "instance2017.xbrl") is a file that is referred to from a file corresponding to the schema (file whose file name is "schema2017.xsd").

Further, the document structure of the second document information 131b depicted in FIG. 3 indicates that a file corresponding to the schema is a file that is referred to from a file corresponding to the presentation linkbase (file whose file name is "presentation2017.xml"), a file corresponding to the definition linkbase (file whose file name is "definition2017.xml") and a file corresponding to the label linkbase (file whose file name is "label2017.xml").

### [Particular Example of Instance Constituting Document Information]

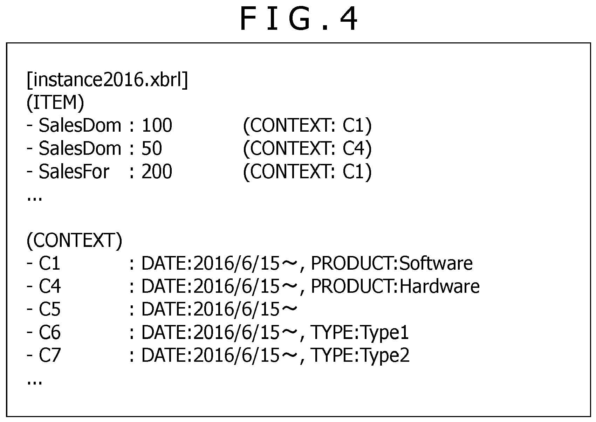

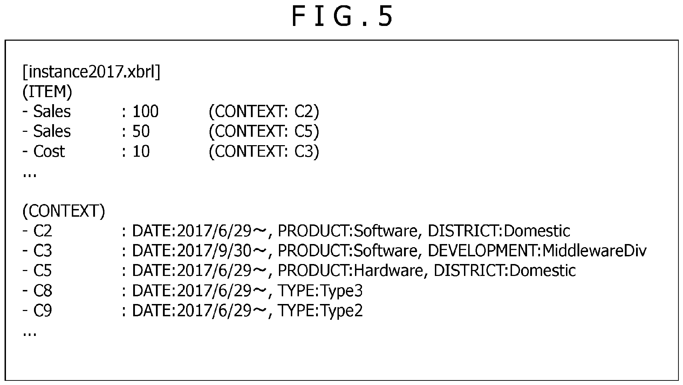

Now, a particular example of an instance configuring the document information 131 is described. FIG. 4 is a view depicting a particular example of a file corresponding to an instance that constitutes the first document information 131a and FIG. 5 is a view depicting a particular example of a file corresponding to an instance that constitutes the second document information 131b.

The instance depicted in FIG. 4 includes information indicating that the item value of "SalesDom" that is an item for referring to a context whose context ID is "C1" is "100," information indicating that the item value of "SalesDom" that is an item for referring to a context whose context ID is "C4" is "50," and information indicating that the item value of "SalesFor" that is an item for referring to a context whose context ID is "C1" is "200."

Further, the instance depicted in FIG. 4 includes, for example, information that indicates that a context whose context ID is "C1" includes information indicating that "date" is "2016/6/15 ∼" and information indicating that "product" is "Software." Description of the other information included in the instance depicted in FIG. 4 is omitted.

Meanwhile, the instance depicted in FIG. 5 includes information indicating that the item value of "Sales" that is an item for referring to a context whose context ID is "C2" is "100," information indicating that the item value of "Sales" that is an item for referring to a context whose context ID is "C5" is "50," and information indicating that the item value of "Cost" that is an item for referring to a context whose context ID is "C3" is "10."

Further, the instance depicted in FIG. 5 includes, for example, information indicating that a context whose context ID is "C2" includes information indicating that "date" is "2017/6/29 ∼," information indicating that "product" is "Software" and information indicating that "district" is "Domestic." Description of the other information included in the instance depicted in FIG. 5 is omitted.

### [Particular Example of Taxonomy Constituting Document Information]

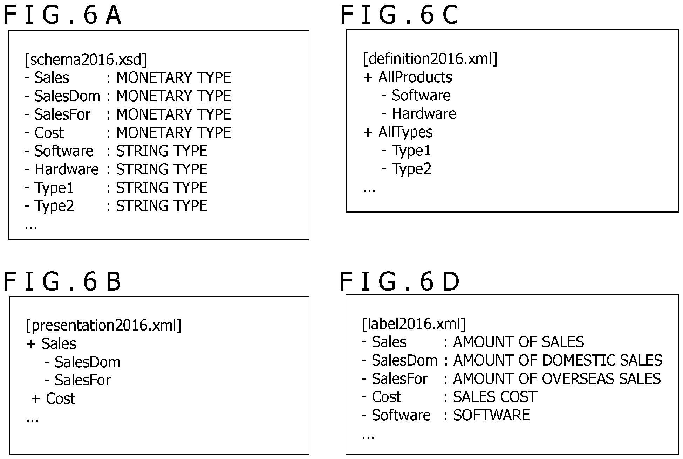

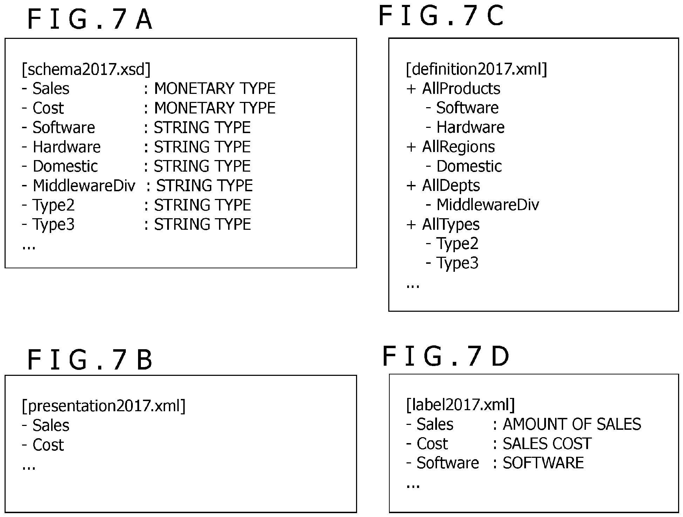

Now, a particular example of a taxonomy constituting the document information 131 is described. FIGs. 6A to 6D are views illustrating particular examples of a file corresponding to a taxonomy constituting the first document information 131a. FIG. 6A depicts a particular example of a file corresponding to the schema; FIG. 6B depicts a particular example of a file corresponding to the presentation linkbase; FIG. 6C depicts a particular example of a file corresponding to the definition linkbase; and FIG. 6D depicts a particular example of a file corresponding to the label linkbase. Meanwhile, FIGs. 7A to 7D are views illustrating particular examples of a taxonomy constituting the second document information 131b. FIG. 7A depicts a particular example of a file corresponding to the schema; FIG. 7B depicts a particular example of a file corresponding to the presentation linkbase; FIG. 7C depicts a particular example of a file corresponding to the definition linkbase; and FIG. 7D depicts a particular example of a file corresponding to the label linkbase.

The schema depicted in FIG. 6A includes information that defines, for example, "Sales," "SalesDom," "SalesFor" and "Cost" as items of the monetary type, and information that defines "Software," "Hardware," "Type1" and "Type2" as items of the string type. Meanwhile, the presentation linkbase depicted in FIG. 6B includes information indicating that, for example, "Sales," "SalesDom" and "SalesFor" constitute a hierarchical structure and "Sales" is a parent item (item included in an upper hierarchy) of "SalesDom" and "SalesFor." Further, the presentation linkbase depicted in FIG. 6B includes information indicating that, for example, a hierarchical structure including "Cost" is not formed.

Further, the definition linkbase depicted in FIG. 6C includes information indicating that, for example, "AllProducts," "Software" and "Hardware" constitute a hierarchical structure and "AllProducts" is a parent item of "Software" and "Hardware." Further, the definition linkbase depicted in FIG. 6C includes information indicating that, for example, "AllTypes," "Type1" and "Type2" constitute a hierarchical structure and "AllTypes" is a parent item of "Type1" and "Type2." Furthermore, the label linkbase depicted in FIG. 6D includes information indicating that, for example, "Sale," "SalesDom," "SalesFor," "Cost" and "Software" are "amount of sales," "amount of domestic sales," "amount of overseas sales," "sales cost" and "software," respectively.

Further, the schema depicted in FIG. 7A includes, for example, information that defines "Sales" and "Cost" as items of the monetary type and information that defines "Software," "Hardware," "Domestic," "MiddlewareDiv," "Type2" and "Type3" as items of the string type. Further, the presentation linkbase depicted in FIG. 7B includes information indicating that, for example, a hierarchical structure including "Sales" is not formed. Furthermore, the presentation linkbase depicted in FIG. 7B includes information indicating that, for example, a hierarchical structure including "Cost" is not formed.

Meanwhile, the definition linkbase depicted in FIG. 7C includes information indicating that, for example, "AllProducts," "Software" and "Hardware" constitute a hierarchical structure and "AllProducts" is a parent item of "Software" and "Hardware." Further, the definition linkbase depicted in FIG. 7C includes information indicating that, for example, "AllRegions" and "Domestic" constitute a hierarchical structure and "AllRegions" is a parent item of "Domestic." Further, the definition linkbase depicted in FIG. 7C includes information indicating that, for example, "AllDepts" and "MiddlewareDiv" constitute a hierarchical structure and "AllDepts" is a parent item of "MiddlewareDiv." Furthermore, the definition linkbase depicted in FIG. 7C includes information indicating that, for example, "AllTypes," "Type2" and "Type3" constitute a hierarchical structure and "AllTypes" is a parent item of "Type2" and "Type3." Meanwhile, the label linkbase depicted in FIG. 7D includes information indicating that, for example, the labels corresponding to "Sales," "Cost" and "Software" are "amount of sales," "sales cost" and "software," respectively.

Here, there is the possibility that the information included in each context described with reference to FIGs. 4 and 5 may be changed at any time in response to a reporting year of financial information or the like. Therefore, for example, in the case where comparison of financial information in different reporting years is performed, a worker specifies an association relationship of contexts corresponding to different reporting years in advance. For example, in this case, the worker refers to context IDs included in the contexts to perform association of the contexts.

However, there is the possibility that contexts for which such association is to be performed may include a context whose context ID has been changed. Therefore, in this case, it is difficult for the worker to perform association of the contexts by referring to the context IDs.

Therefore, the worker performs association of contexts, for example, based on a similarity relationship between different pieces of information included in the contexts. Consequently, the worker may perform association of contexts even if there exists a context whose context ID has been changed.

However, each context for which association is to be performed sometimes includes a plurality of contexts that include information similar in the substance to each other. Therefore, in this case, it is difficult for the worker to perform association of the contexts by referring to a similarity relationship of information included in the contexts.

Further, in the case where association of contexts is performed by manual operation, depending upon the substance of the change of the information included in the contexts, the operation burden on the worker required for association of the contexts becomes enormous.

Therefore, the information processing apparatus 1 in the present embodiment accepts contexts relating to items included in first document information 131a (hereinafter referred to also as first document 131a) (such context is hereinafter referred to also as comparison source context or first attribute) and contexts relating to items included in second document information 131b (hereinafter referred to also as second document 131b) (such context is hereinafter referred to also as comparison destination context or second attribute). For example, the information processing apparatus 1 acquires contents included in the first document information 131a and the second document information 131b stored in the storage unit 130.

Then, the information processing apparatus 1 refers to the storage unit 130, which stores information that associates information that specifies items included in the first document information 131a with contexts relating to the items and information that associates information that specifies items included in the second document information 131b with contexts relating to the items, and specifies an item associated with the comparison source context (such an item is hereinafter referred to also as first item) and an item associated with the comparison destination context (such an item is hereinafter referred to also as second item).

Then, the information processing apparatus 1 refers to the storage unit 130, which stores information indicative of a relationship between the items included in the first document information 131a and information indicative of a relationship between the items included in the second document information 131b, and specifies an item having a specific relationship to the first item (such an item is hereinafter referred to also as third item) and another item having a specific relationship to the second item (such an item is hereinafter referred to also as fourth item).

Further, the information processing apparatus 1 decides based on consistency between the third item and the fourth item whether or not the comparison destination context is associated with the comparison source context.

For example, the information processing apparatus 1 generates information indicative of items that refer to the contexts and information indicative of a relationship between the items in advance from information included in the first document information 131a and the second document information 131b stored in the storage unit 130. Then, the information processing apparatus 1 estimates an association relationship between the comparison source context (context included in the first document information 131a) and the comparison destination context (context included in the second document information 131b) based on the information indicative of the items that refer to the contexts and the information indicative of a relationship between the items.

Consequently, even in the case where the context ID of a context is changed or a plurality of contexts similar to a context exist, the information processing apparatus 1 may perform specification of a context to be associated with each context.

### [Hardware Configuration of Information Processing Apparatus]

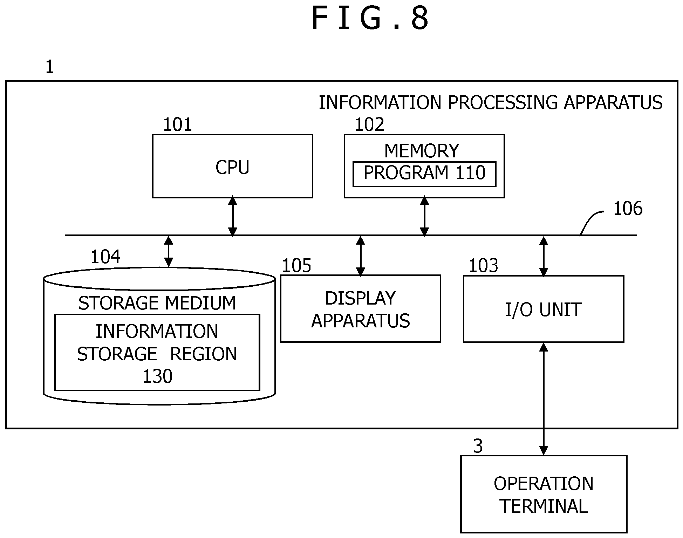

Now, a hardware configuration of an information processing apparatus is described. FIG. 8 is a view depicting a hardware configuration of an information processing apparatus. The information processing apparatus here may be the information processing apparatus1 depicted in FIG. 1.

As depicted in FIG. 8, the information processing apparatus 1 includes a central processing unit (CPU) 101 that is a processor, a memory 102, an external interface (hereinafter referred to also as input/output (I/O) unit) 103, a storage medium 104, and a display apparatus 105 that displays various kinds of information. The components mentioned of the information processing apparatus 1 are coupled to each other by a bus 106.

The storage medium 104 stores a program 110 for performing a decision process, for example, in a program storage region (not depicted) in the storage medium 104. The storage medium 104 may be, for example, a hard disk drive (HDD).

Further, the storage medium 104 includes, for example, a storage unit 130 (also referred to as information storage region 130) that stores information to be used when a decision process is performed.

The CPU 101 executes the program 110 loaded into the memory 102 from the storage medium 104 and performs a decision process.

The I/O unit 103 performs communication, for example, with the operation terminal 3.

### [Function of Information Processing Apparatus]

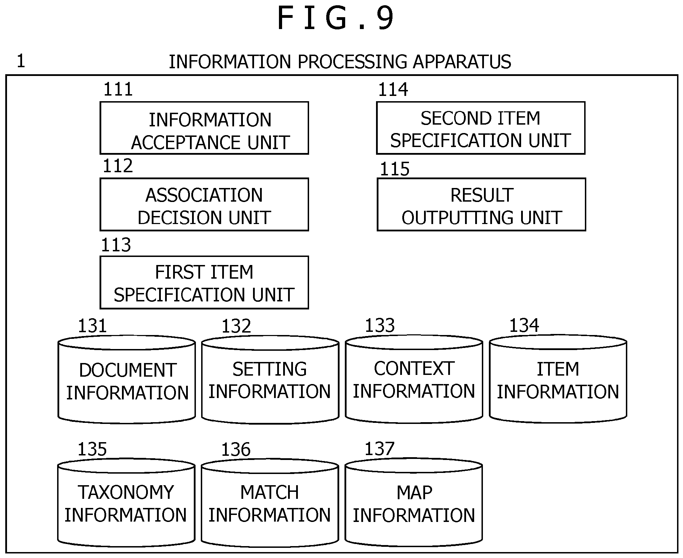

Now, functions of an information processing apparatus are described. FIG. 9 is a block diagram of functions of an information processing apparatus. The information processing apparatus here may be the information processing apparatus1 depicted in FIG. 1.

The information processing apparatus 1 implements, by organic cooperation of hardware such as the CPU 101 and memory 102 with the program 110, various functions including an information acceptance unit 111, an association decision unit 112, a first item specification unit 113, a second item specification unit 114 and a result outputting unit 115 as depicted in FIG. 9.

Further, in the information storage region 130 described with reference to FIG. 8 and so forth, for example, document information 131, setting information 132, context information 133, item information 134, taxonomy information 135, match information 136 and map information 137 are stored.

The information acceptance unit 111 accepts, for example, first document information 131a and second document information 131b inputted from the operation terminal 3. Then, the information acceptance unit 111 stores the accepted first document information 131a and second document information 131b into the information storage region 130.

Further, the information acceptance unit 111 generates, from a comparison source context included in an instance constituting the first document information 131a and a comparison destination text included in an instance constituting the second document information 131b, context information 133 indicative of information included in each context. Further, the information acceptance unit 111 generates, from items included in instances constituting the first document information 131a and items included in instances constituting the second document information 131b, item information 134 that is information that associates information that specifies the items and contexts relating to the items with each other. Furthermore, the information acceptance unit 111 generates, from taxonomies constituting the first document information 131a and taxonomies constituting the second document information 131b, taxonomy information 135 indicative of information included in each taxonomy (for example, information including a relationship between the items). Then, the information acceptance unit 111 stores the generated context information 133, item information 134 and taxonomy information 135 into the information storage region 130. A particular example of the context information 133, item information 134 and taxonomy information 135 is hereinafter described.

The association decision unit 112 refers, for example, to the context information 133 stored in the information storage region 130 and decides whether or not the information included in the comparison source context and the information included in the comparison destination context match with each other.

The first item specification unit 113 refers to the item information 134 stored in the information storage region 130 and specifies a first item associated with the comparison source context and a second item associated with the comparison destination context. For example, the first item specification unit 113 may specify the first item and the second item in the case where the association decision unit 112 decides that the ratio of the information included in the comparison destination context, which matches with the information included in the comparison source context, is equal to or higher than a threshold value included in the setting information 132 set in advance in the information storage region 130. A particular example of the setting information 132 is hereinafter described.

The second item specification unit 114 refers to the taxonomy information 135 stored in the information storage region 130 and specifies a third item having a specific relationship to the first item specified by the first item specification unit 113 and a fourth item having a specific relationship to the second item specified by the first item specification unit 113. For example, the second item specification unit 114 performs specification of a third item that is a parent item of the first item and a fourth item that is a parent item of the second item.

Then, the association decision unit 112 decides based on the consistency between the third item and the fourth item specified by the second item specification unit 114 whether or not the comparison destination context is associated with the comparison source context.

Thereafter, the result outputting unit 115 outputs, for example, a result of the decision regarding whether or not the comparison destination context is associated with the comparison source context (decision result by the association decision unit 112) to the operation terminal 3. It is to be noted that the match information 136 and the map information 137 are hereinafter described.

### [Outline of First Embodiment]

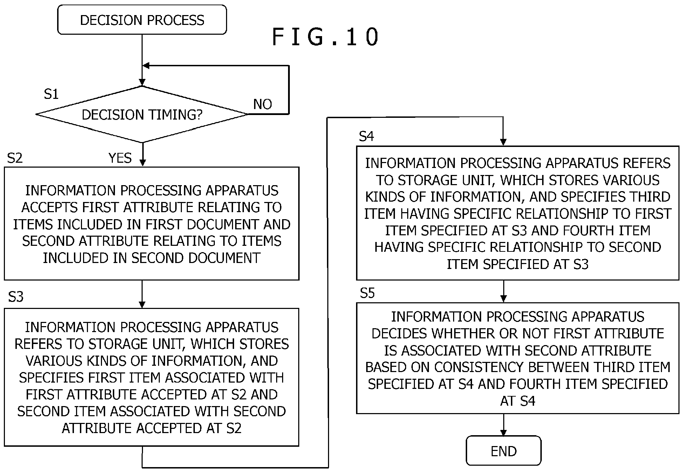

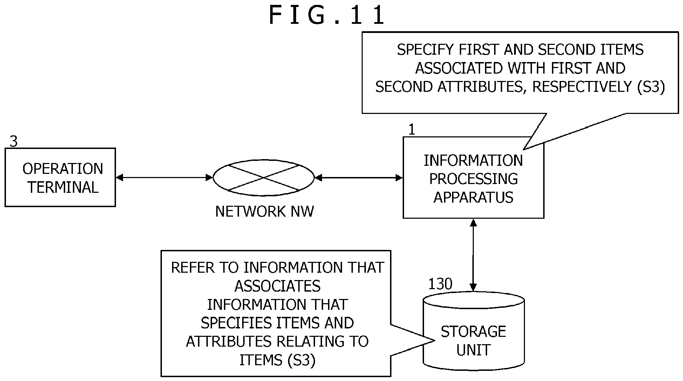

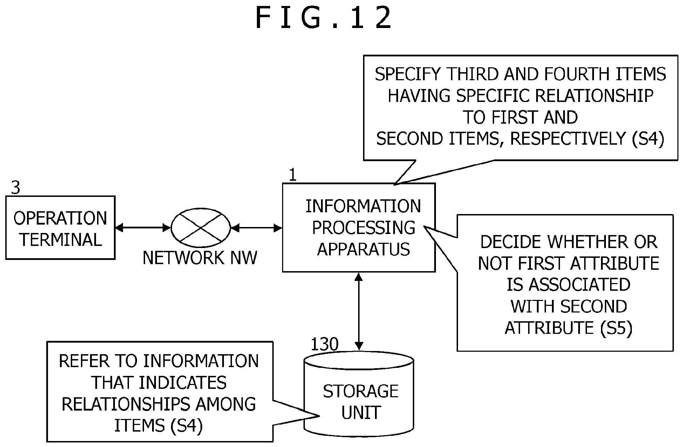

Now, an outline of a first embodiment is described. FIG. 10 is a flow chart illustrating an outline of a decision process according to the first embodiment. Further, FIGs. 11 and 12 are views illustrating an outline of the decision process according to the first embodiment. An outline of the decision process depicted in FIG. 10 is described with reference to FIGs. 11 and 12.

As depicted in FIG. 10, the information processing apparatus 1 waits till a decision timing for an association relationship of contexts (NO at S1). The decision timing of an association relationship of contexts may be, for example, a timing at which the worker performs inputting through the operation terminal 3 to perform decision of an association relationship of contexts.

When a decision timing for an association relationship of contexts comes (YES at S1), the information processing apparatus 1 accepts a first attribute relating to items included in the first document information 131a and a second attribute relating to items included in the second document information 131b (S2).

Then, as depicted in FIG. 11, the information processing apparatus 1 refers to the storage unit 130, which stores information that associates information that specifies items included in the first document information 131a with attributes relating to the items and information that associates information that specifies items included in the second document information 131b with attributes relating to the items, and specifies a first item associated with the first attribute accepted by the process at S2 and a second item associated with the second attribute accepted by the process at S2 (S3).

Further, as depicted in FIG. 12, the information processing apparatus 1 refers to the storage unit 130, which stores information indicative of a relationship between the items included in the first document information 131a and information indicative of a relationship between the items included in the second document information 131b, and specifies a third item having a specific relationship with the first item specified by the process at S3 and a fourth item having a specific relationship with the second item specified by the process at S3 (S4).

Thereafter, the information processing apparatus 1 decides, based on the consistency between the third item specified by the process at S4 and the fourth item specified by the process at S4, whether or not the first attribute corresponds to the second attribute (S5).

For example, the information processing apparatus 1 generates, from information included in the first document information 131a and the second document information 131b stored in the storage unit 130, information indicative of items that refer to the contexts and information indicative of a relationship between the items in advance. Then, the information processing apparatus 1 estimates, based on the information indicative of the items that refer to the contexts and the information indicative of a relationship between the items, an association relationship between the comparison source context (context included in the first document information 131a) and the comparison destination context (context included in the second document information 131b).

Consequently, even in the case where the context ID of a context is changed or a plurality of contexts similar to a context exist, the information processing apparatus 1 may perform specification of a context to be associated with each context.

### [Details of First Embodiment]

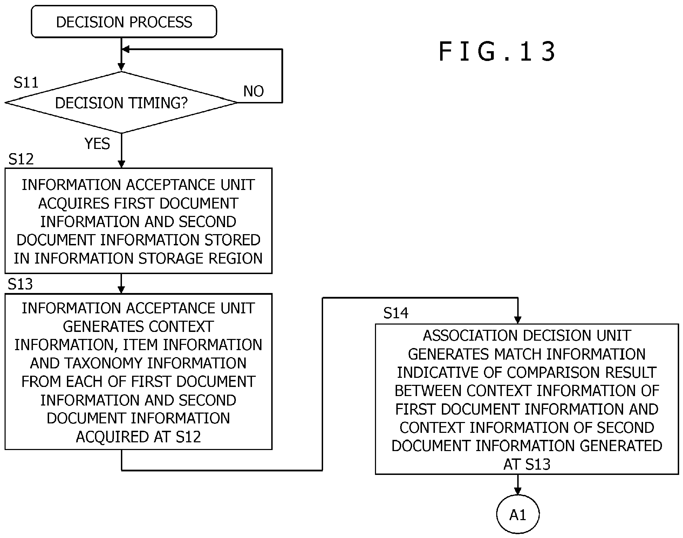

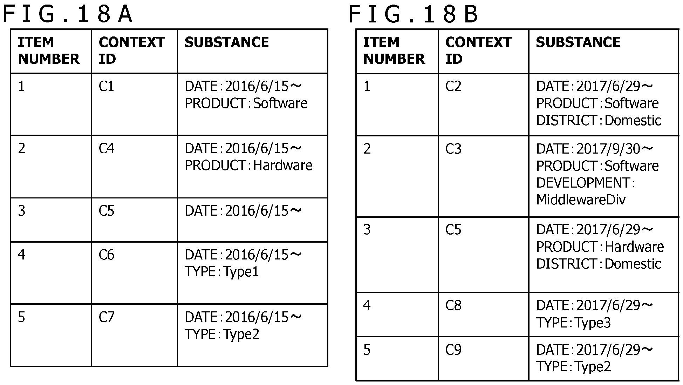

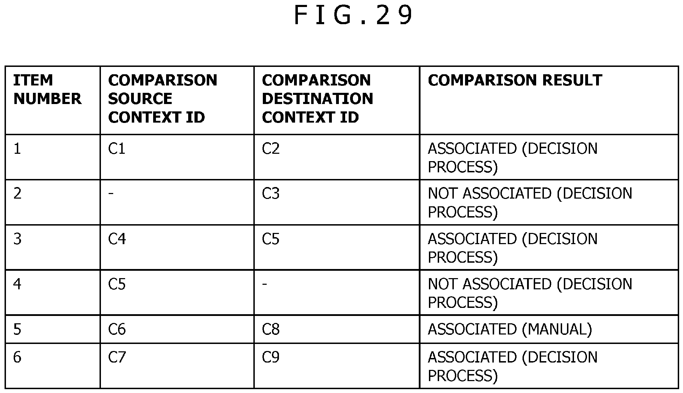

Now, details of the first embodiment are described. FIGs. 13 to 17 are flow charts illustrating details of the decision process in the first embodiment. Further, FIGs. 18A to 29 are views illustrating details of the decision process in the first embodiment. Details of the decision process of FIGs. 13 to 17 are described with reference to FIGs. 18A to 29.

As depicted in FIG. 13, the information acceptance unit 111 of the information processing apparatus 1 waits till a decision timing for an association relationship of contexts (NO at S11).

In the case where a decision timing for an association relationship of contexts comes (YES at S11), the information acceptance unit 111 acquires, for example, the first document information 131a and the second document information 131b stored in the information storage region 130 (S12).

Then, the information acceptance unit 111 generates context information 133, item information 134 and taxonomy information 135 from the first document information 131a and the second document information 131b acquired by the process at S12 (S13). Then, the information acceptance unit 111 stores the generated context information 133, item information 134 and taxonomy information 135 into the information storage region 130. In the following, a particular example of the context information 133, item information 134 and taxonomy information 135 is described.

### [Particular Example of Context Information]

First, a particular example of the context information 133 is described. FIGs. 18A and 18B are views illustrating particular examples of the context information 133. FIG. 18A depicts a particular example of the first context information 133a generated from the first document information 131a, and FIG. 18B depicts a particular example of the second context information 133b generated from the second document information 131b.

The context information 133 depicted in FIGs. 18A and 18B includes "item number" for identifying each piece of information included in the context information 133, "context ID" to which a context ID is set, and "substance" to which information included in a context corresponding to the context ID is set.

For example, in the instance described with reference to FIG. 4, information included in a context whose context ID is "C1" includes "date: 2016/6/15 ∼" and "product: Software." Therefore, the information acceptance unit 111 sets "C1" as "context ID" of information whose "item number" is "1" and sets "date: 2016/6/15 ∼" and "product: Software" as "substance" as depicted in FIG. 18A. Description of the other information included in FIG. 18A is omitted.

Meanwhile, in the instance described with reference to FIG. 5, information included in a context whose context ID is "C2" includes "date: 2017/6/29 ∼," "product: Software" and "district: Domestic." Therefore, the information acceptance unit 111 sets "C2" as "context ID" of information whose "item number" is "1," sets "date: 2017/6/29 ∼," "product: Software" and "district: Domestic" as "substance" as depicted in FIG. 18B. Description of the other information included in FIG. 18B is omitted.

### [Particular Example of Item Information]

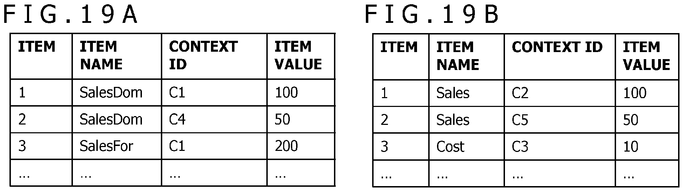

Now, particular examples of the item information 134 are described. FIGs. 19A and 19B are views illustrating a particular example of the item information 134. FIG. 19A is a view illustrating a particular example of the first item information 134a generated from the first document information 131a, and FIG. 19B is a view illustrating a particular example of the second item information 134b generated from the second document information 131b.

The item information 134 depicted in FIGs. 19A and 19B includes "item number" for identifying each piece of information included in the item information 134, "item name" to which an item name is set, "context ID" to which a context ID associated with a context referred to by an item having an item name set in "item name" is set, and "item value" to which an item value corresponding to an item having an item name set in "item name" is set.

For example, the instance described with reference to FIG. 4 includes information indicating that the item value of "SalesDom" that is an item that refers to a context whose context ID is "C1" is "100." Therefore, the information acceptance unit 111 sets "SalesDom" as "item name" of information whose "item number" is "1," sets "C1" as "context ID" and sets "100" as "item value" as depicted in FIG. 19A. Description of the other information included in FIG. 19A is omitted.

Meanwhile, the instance described with reference to FIG. 5 includes information indicating that the item value of "Sales" that is an item that refers to a context whose context ID is "C2" is "100." Therefore, the information acceptance unit 111 sets "Sales" as "item name" of information whose "item number" is "1," sets "C2" as "context ID" and sets "100" as "item value" as depicted in FIG. 19B. Description of the other information included in FIG. 19B is omitted.

### [Particular Example of Taxonomy Information]

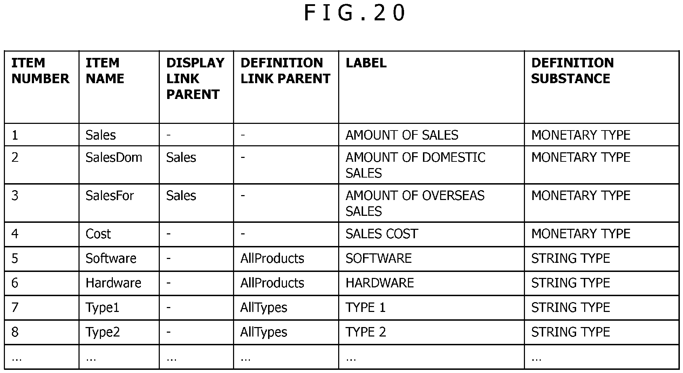

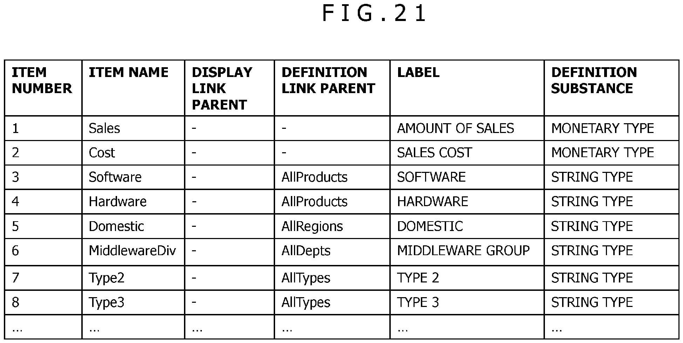

Now, a particular example of the taxonomy information 135 is described. FIGs. 20 and 21 are views illustrating particular examples of the taxonomy information 135. FIG. 20 depicts a particular example of the first taxonomy information 135a generated from the first document information 131a, and FIG. 21 depicts a particular example of the second taxonomy information 135b generated from the second document information 131b.

The taxonomy information 135 depicted in FIGs. 20 and 21 includes "item number" for identifying each piece of information included in the taxonomy information 135 and "item name" to which an item name is set. Further, the taxonomy information 135 depicted in FIGs. 20 and 21 further includes "presentation link parent" to which an item name corresponding to a parent item of an item having an item name set in "item name" from within information included in the presentation linkbase is set and "definition link parent" to which an item name corresponding to a parent item of an item having an item name set in "item name" from within information included in the definition linkbase is set. Further, the taxonomy information 135 depicted in FIGs. 20 and 21 includes "label" to which a label of an item having an item name set in "item name" from within information included in the label linkbase is set and "definition substance" to which the definition substance of an item having an item name set in "item name" from within information included in the schema is set. It is to be noted that, in the case where a taxonomy constituting the document information 131 includes a different linkbase (for example, a calculation linkbase, a reference linkbase or the like), the information acceptance unit 111 may include information included in the different linkbase into the taxonomy information 135.

For example, the schema described with reference to FIG. 6A includes information that defines "Sales" as an item of the monetary type, and the label linkbase described with reference to FIG. 6D includes information indicating that the label corresponding to "Sales" is "amount of sales." Therefore, the information acceptance unit 111 sets "Sales" as "item name" of the information whose "item number" is "1," sets "amount of sales" as "label" and sets "monetary type" as "definition substance" as depicted in FIG. 20. Then, the information acceptance unit 111 sets "-" indicating that information is not set as "presentation link parent" and "definition link parent" of the information whose "item number" is "1" as depicted in FIG. 20.

Meanwhile, the schema described with reference to FIG. 6A includes information that defines "SalesDom" as an item of the monetary type, and the presentation linkbase described with reference to FIG. 6B includes information indicating that "Sales" is a parent item of "SalesDom." Further, the label linkbase described with reference to FIG. 6D includes information indicating that the label corresponding to "SalesDom" is "amount of domestic sales." Therefore, the information acceptance unit 111 sets "SalesDom" as "item name" of the information whose "item number" is "2," sets "Sales" as "presentation link parent," sets "-" as "definition link parent," sets "amount of domestic sales" as "label," and sets "monetary type" as "definition substance" as depicted in FIG. 20.

Further, the schema described with reference to FIG. 6A includes information that defines "Software" as an item of the monetary type, and the definition linkbase described with reference to FIG. 6C includes information indicating that "AllProducts" is a parent item of "Software." Further, the label linkbase described with reference to FIG. 6D includes information indicating that the label corresponding to "SalesDom" is "amount of overseas sales." Therefore, the information acceptance unit 111 sets "Software" as "item name" of the information whose "item number" is "5," sets "-" as "presentation link parent," sets "AllProducts" as "definition link parent," sets "software" as "label," and sets "string type" as "definition substance" as depicted in FIG. 20. Description of the other information included in FIG. 20 is omitted. Meanwhile, the information included in FIG. 21 is same as that described in connection with FIG. 20, and therefore, overlapping description of the information is omitted.

Referring back to FIG. 13, the association decision unit 112 of the information processing apparatus 1 generates match information 136 indicative of a result of comparison between the first context information 133a of the first document information 131a and the second context information 133b of the second document information 131b generated by the process at S13 (S14). Then, the association decision unit 112 stores the generated match information 136 into the information storage region 130. In the following, a particular example of the match information 136 is described.

### [Particular Example of Match Information]

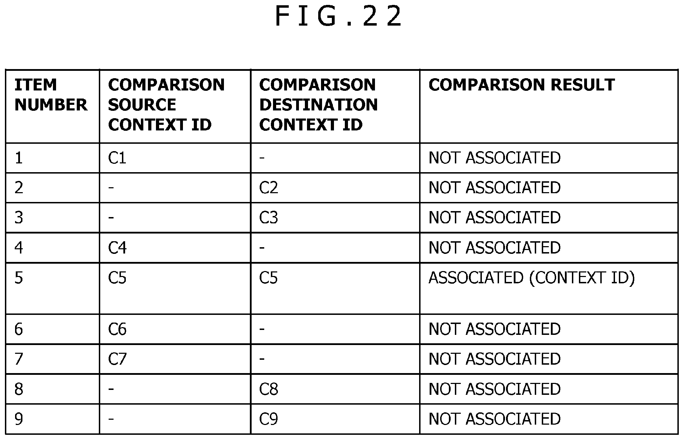

FIGs. 22, 23, 25, 27, 28 and 29 are views illustrating particular examples of the match information 136.

The match information 136 depicted in FIG. 22 and so forth includes "item number" for identifying each piece of information included in the match information 136, "comparison source context ID" to which a context ID of the first context information 133a is set, and "comparison destination context ID" to which a context ID of the second context information 133b is set. The match information 136 depicted in FIG. 22 and so forth further includes "comparison result" to which a result of comparison between the context ID set in "comparison source context ID" and the context ID set in the "comparison destination context ID."

For example, the contexts included in the instance described with reference to FIG. 4 include contexts whose context ID is "C1," "C4," "C5," "C6" and "C7." Further, the contexts included in the instance described with reference to FIG. 5 include contexts whose context ID is "C2," "C3," "C5," "C8" and "C9." Therefore, the association decision unit 112 specifies, for example, only the context whose context ID is "C5" as a context included in both the instance described with reverence to FIG. 4 and the instance described with reference to FIG. 5.

Accordingly, as depicted in FIG. 22, the association decision unit 112 sets "C5" as "comparison source context ID" and "comparison destination context ID" of the information whose item number is "5." Then, the association decision unit 112 sets "associated (context ID)" indicating that the context IDs set in "comparison source context ID" and "comparison destination context ID" are associated with each other as "comparison result" of the information whose "item number" is "5" as depicted in FIG. 22.

On the other hand, as depicted in FIG. 22, the association decision unit 112 sets, for example, "C1" that is a context ID other than "C5" as "comparison source context ID" of the information whose "item number" is "1," sets "-" as "comparison destination context ID," and sets "not associated" as "comparison result." Further, as depicted in FIG. 22, the association decision unit 112 sets, for example, "-" as "comparison source context ID" of the information whose "item number" is "2," sets "C2" that is a context ID other than "C5" as "comparison destination context ID," and sets "not associated" as "comparison result." Description of the other information included in FIG. 22 is omitted.

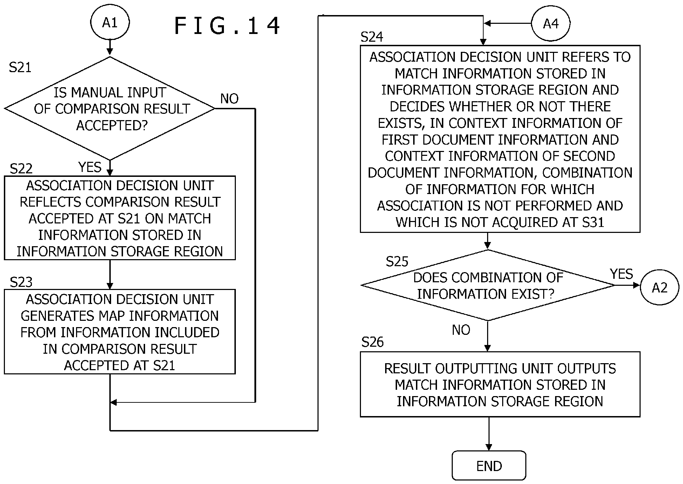

Referring back to FIG. 14, the association decision unit 112 decides whether or not a manual input of a comparison result (comparison result between the first context information 133a and the second context information 133b) is accepted by the information acceptance unit 111 (S21). For example, the association decision unit 112 decides whether or not the worker performs inputting of a comparison result by a manual operation through the operation terminal 3 before a given period of time elapses after generation of the match information 136 is performed by the process at S14.

As a result, in the case where it is decided that a manual input of a comparison result is accepted (YES at S21), the association decision unit 112 reflects the comparison result accepted by the process at S21 on the match information stored in the information storage region 130 (S22).

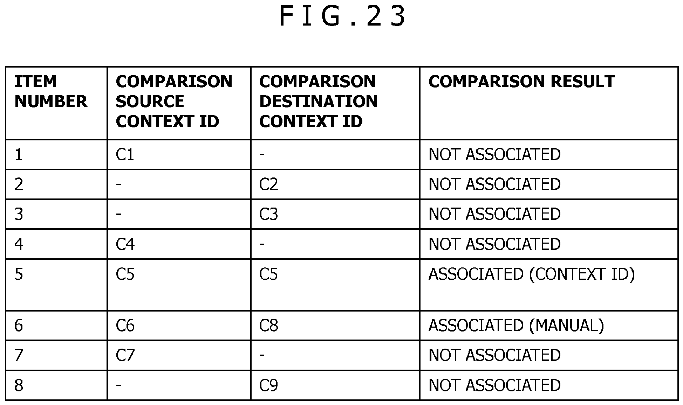

For example, the information acceptance unit 111 accepts a comparison result including information that indicates that the context whose context ID is "C6" and the context whose context ID is "C8" are associated with each other. In this case, the association decision unit 112 sets "associated (manual)" indicating the decision that the contexts are associated with each other is made by a manual operation of the worker to "comparison result" of the information to whose "comparison source context ID" and "comparison destination context ID" "C6" and "C8" are set, respectively, (namely, the information whose "item number" is "6") as depicted in FIG. 23.

Consequently, it becomes possible for the association decision unit 112 to efficiently perform comparison between the first context information 133a and the second context information 133b.

Thereafter, the association decision unit 112 generates map information 137 from information included in the comparison result accepted by the process at S21 (S23). The map information 137 is information indicative of, from within the information included in the first context information 133a and the second context information 133b, information decided to be same information by the comparison by a manual operation of the worker. Then, the association decision unit 112 stores the generated map information 137 into the information storage region 130.

Consequently, it becomes possible for the association decision unit 112 to efficiently perform comparison between the first context information 133a and the second context information 133b by referring to the map information 137 stored in the information storage region 130.

On the other hand, in the case where it is decided that a manual input of a comparison result is not accepted (NO at S21), the association decision unit 112 does not perform the processes at S22 and S23. In the following, a particular example of the map information 137 is described.

### [Particular Example of Map Information]

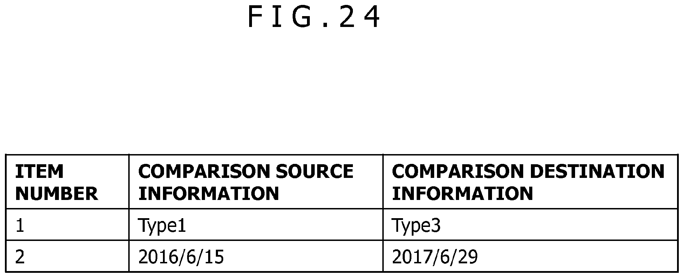

FIG. 24 is a view illustrating a particular example of the map information 137.

The map information 137 depicted in FIG. 24 includes "item number" for identifying each piece of information included in the map information 137, "comparison source information" to which information included in the first context information 133a is set, and "comparison destination information" to which information included in the second context information 133b is set.

For example, as depicted in FIG. 24, the association decision unit 112 sets "Type1" as "comparison source information" of the information whose "item number" is "1" and sets "Type3" as "comparison destination information." Further, as depicted in FIG. 24, the association decision unit 112 sets, for example, "2016/6/15" as "comparison source information" of the information whose "item number" is "2" and sets "2017/6/29" as "comparison destination information."

Referring back to FIG. 14, the association decision unit 112 refers to the match information 136 stored in the information storage region 130 and decides whether or not a combination of information for which association is not performed as yet and which is not acquired by a process at S31 hereinafter described exists in the first context information 133a included in the first document information 131a and the second context information 133b included in the second document information 131b (S24).

For example, the association decision unit 112 refers to the match information 136 described with reference to FIG. 23 and decides whether or not a combination, which is not acquired as yet by the process at S31, of information set to "comparison source context" and information set to "comparison destination context" of information to whose "comparison result" "not associated" is set.

As a result, in the case where it is decided that such combination of information does not exist (NO at S25), the result outputting unit 115 of the information processing apparatus 1 outputs, for example, the match information 136 stored in the information storage region 130 to the operation terminal 3 (S26). Thereafter, the information processing apparatus 1 ends the decision process.

For example, in this case, the result outputting unit 115 decides that the comparison between the first context information 133a and the second context information 133b is completed and performs outputting of the match information 136 that is a result of the comparison between the first context information 133a and the second context information 133b.

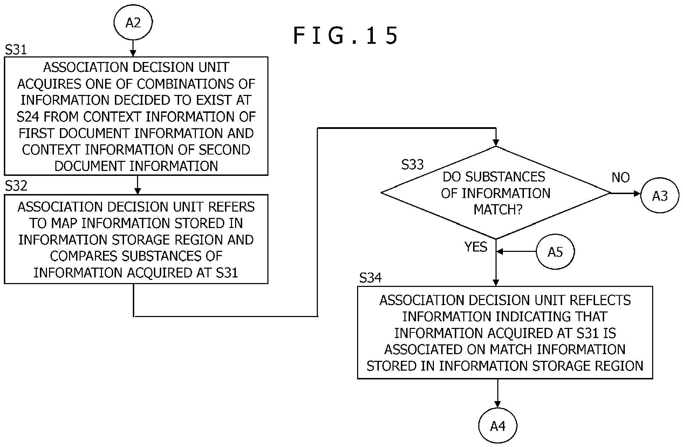

On the other hand, in the case where it is decided that such combination of information as described above exists (YES at S25), the association decision unit 112 acquires one combination of pieces of information decided to exist by the process at S24 from the first context information 133a included in the first document information 131a and the second context information 133b included in the second document information 131b as depicted in FIG. 15 (S31).

For example, in the match information 136 described with reference to FIG. 23, the information set to "comparison source context ID" of the information to whose "comparison result" "not associated" is set is "C1," "C4" and "C7." Further, in the match information 136 described with reference to FIG. 23, the information set to "comparison destination context ID" of the information to whose "comparison result" "not associated" is set is "C2," "C3" and "C9." Therefore, in the case where the process at S31 is performed for the first time, the association decision unit 112 acquires a combination of one of "C1," "C4" and "C7" and one of "C2," "C3" and "C9."

Then, the association decision unit 112 refers to the map information 137 stored in the information storage region 130 and compares the substances of pieces of information included in the combination acquired by the process at S31 (S32).

For example, the association decision unit 112 performs processing assuming that the information set in "comparison source information" and the information set in the "comparison destination information" in the item numbers of the map information 137 described with reference to FIG. 24 are pieces of information that match with each other.

As a result, in the case where it is decided that the substances of the pieces of information included in the combination acquired by the process at S31 match with each other (YES at S33), the association decision unit 112 reflects the information that the pieces of information acquired by the process at S31 are associated with each other on the match information 136 stored in the information storage region 130 (S34). Then, the association decision unit 112 performs the processes at the steps beginning with S24 again.

For example, in the map information 137 described with reference to FIG. 24, to the information whose "item number" is "2," "2016/6/15" is set as "comparison source information," and "2017/6/29" is set as "comparison destination information." Further, to the information to whose "context ID" "C7" is set in the first context information 133a described with reference to FIG. 18A, "date: 2016/6/15 ∼" and "type: Type2" are set, and to the information to whose "context ID" "C9" is set in the second context information 133b described with reference to FIG. 18B, "date: 2016/6/29 ∼" and "type: Type2" are set. Therefore, in this case, the association decision unit 112 may decide that the context whose context ID is "C7" and the context whose context ID is "C9" are associated with each other.

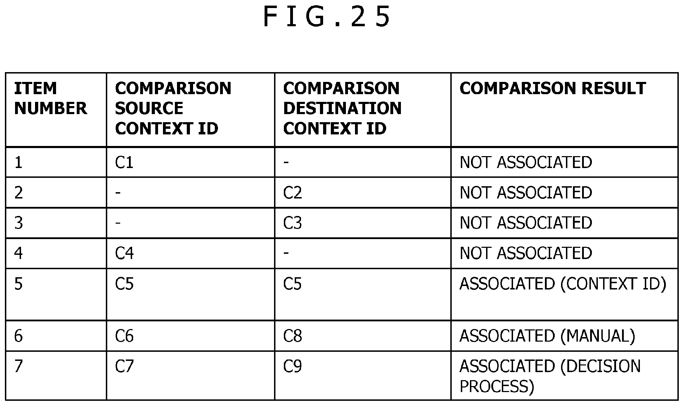

Accordingly, in the case where the combination of the pieces of information whose context ID is "C7" and "C9" is acquired by the process at S31, the association decision unit 112 sets "associated (decision process)" indicating that it is decided by the decision process that the contexts are associated with each other to "comparison result" of the information to whose "comparison source context ID" and "comparison destination context ID" "C7" and "C9" are set, respectively, (information whose "item number" is "7") as depicted in FIG. 25.

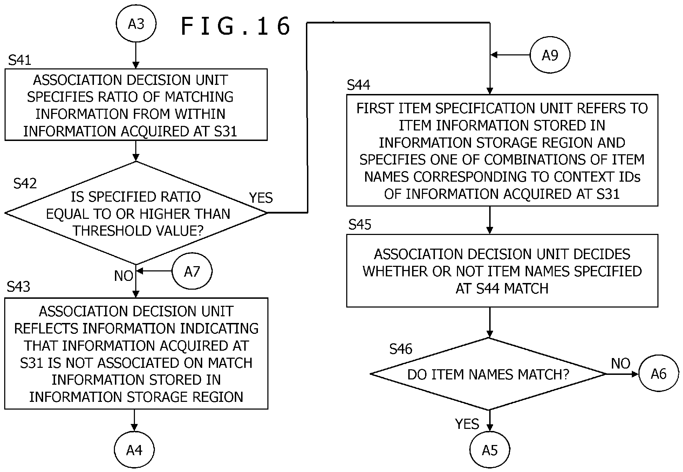

On the other hand, in the case where it is decided that the substances of the pieces of information included in the combination acquired by the process at S31 do not match with each other (NO at S33), the association decision unit 112 specifies the ratio of the matching information in the information acquired by the process at S31 as depicted in FIG. 16 (S41).

For example, the association decision unit 112 specifies the ratio of information that matches with the information included in the first context information 133a acquired by the process at S31 from within the information included in the second context information 133b acquired by the process at S31.

For example, in the first context information 133a described with reference to FIG. 18A, to "substance" of the information to whose "context ID" "C1" is set, "date: 2016/6/15 ∼" and "product: Software" are set. Meanwhile, in the second context information 133b described with reference to FIG. 18B, to "substance" of the information to whose "context ID" "C2" is set, "date: 2017/6/29 ∼," "product: Software" and "district: Domestic" are set. Furthermore, in the map information 137 described with reference to FIG. 24, to "comparison destination information" of the information to whose "comparison source information" "2016/6/15" is set (information whose "item number" is "2"), "2017/6/29" is set.

Therefore, the association decision unit 112 decides that "date: 2017/6/29 ∼" and "product: Software" in the information set in "substance" of the information to whose "context ID" "C2" is set match with the information set in "substance" of the information to whose "context ID" "C1" is set. Accordingly, in this case, the association decision unit 112 specifies, for example, "67 (%)" as the ratio of the information whose substance matches from within the information acquired by the process at S31.

In the case where it is decided that the ratio specified by the process at S41 is not equal to or higher than the threshold value (NO at S42), the association decision unit 112 reflects information indicating that the pieces of information acquired by the process at S31 are not associated with each other on the match information 136 stored in the information storage region 130 (S43). Thereafter, the association decision unit 112 performs the processes at the steps beginning with S24 again.

It is to be noted that the association decision unit 112 may perform the process at S42 by referring to the setting information 132 stored in advance in the information storage region 130. In the following, a particular example of the setting information 132 is described.

### [Particular Example of Setting Information]

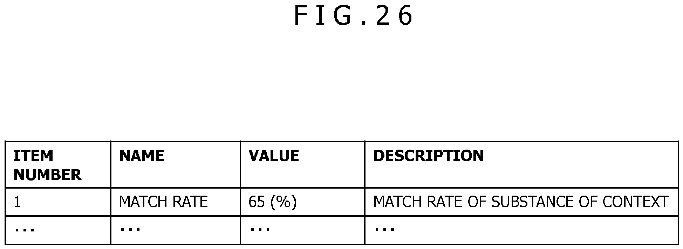

FIG. 26 is a view illustrating a particular example of the setting information 132.

The setting information 132 depicted in FIG. 26 includes "item number" for identifying each piece of information included in the setting information 132, "name" to which a name of each piece of information is set, "value" to which a value of each piece of information is set, and "description" to which description of each piece of information is set.

For example, in the setting information 132 depicted in FIG. 26, to information whose "item number" is "1," "match rate" is set as "name," "65 (%)" is set as "value," and "match rate of substance of context" is set as "description."

Therefore, in the process at S42, the association decision unit 112 may use, for example, "65 (%)" set in "value" of the information to whose "name" "match rate" is set (information whose "item number" is "1") as the threshold value.

Referring back to FIG. 16, in the case where the specified ratio is equal to or higher than the threshold value (YES at S42), the first item specification unit 113 of the information processing apparatus 1 refers to the item information 134 stored in the information storage region 130 and specifies one combination of item names corresponding to the context IDs of the information acquired by the process at S31 (S44).

For example, in the case where the information set to "value" of the information to whose "name" "match ratio" is set in the setting information 132 as described with reference to FIG. 26 is "65 (%)" and the ratio specified by the process at S41 is "67 (%)," the first item specification unit 113 decides that the ratio specified by the process at S41 is equal to or higher than the threshold value and performs the process at S44.

Further, in the first item information 134a described with reference to FIG. 19A, "SalesDom" and "SalesFor" are set to "item name" of the pieces of information whose "context ID" is "C1" (information whose "item number" is "1" and "3"). Further, in the second item information 134b described with reference to FIG. 19B, "Sales" is set to "item name" of the information whose "context ID" is "C2" (information whose "item number" is "1"). Therefore, the first item specification unit 113 specifies "SalesDom" and "Sales," for example, by the process at S44.

Thereafter, the association decision unit 112 decides whether or not the item names specified by the process at S44 match with each other (S45).

In the case where it is decided that the item names specified by the process at S44 match with each other (YES at S46), the association decision unit 112 performs the processes at the steps beginning with step S34 again.

For example, in this case, the association decision unit 112 decides that the pieces of information included in the combination acquired by the process at S31 are pieces of information associated with each other (same information for which change of the substance has been performed).

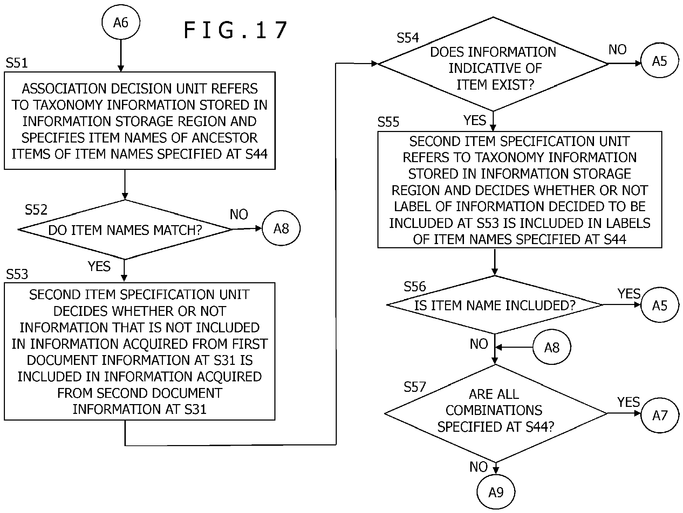

On the other hand, in the case where it is decided that the item names specified by the process at S44 do not match (No at S46), the association decision unit 112 refers to the taxonomy information 135 stored in the information storage region 130 and specifies the item names of ancestor items (ancestor items including parent items) of the item names included in the combination specified by the process at S44 as depicted in FIG. 17 (S51).

Then, the association decision unit 112 decides whether or not, in the item names of the ancestor item corresponding to one of the item names included in the combination specified by the process at S44, an item name that matches with the other item name exists (S52).

For example, the association decision unit 112 decides whether or not, in the item names of ancestor items specified by referring to the first taxonomy information 135a by the process at S51, an item name that matches with the item name specified by referring to the second item information 134b by the process at S44 exists or whether or not, in the item names of the ancestor items specified by referring to the second taxonomy information 135b by the process at S51, an item name that matches with the item name specified by referring to the first item information 134a by the process at S44 exists.

For example, in the first taxonomy information 135a described with reference to FIG. 20, "Sales" is set in "presentation link parent" of the information whose "item name" is "SalesDom." Therefore, in the case where, for example, the item name specified from the first item information 134a by the process at S51 is "SalesDom" and the item name specified from the second item information 134b by the process at S51 is "Sales," the association decision unit 112 decides that the item name of the parent item corresponding to the item name specified from the first item information 134a and the item name specified from the second item information 134b match with each other.

For example, even in the case where the substances of pieces of information included in the combination acquired by the process at S31 are different from each other, in the case where the ratio of information included in common in the pieces of information satisfies a given condition and it is decided that a given commonality exists between the item names of the items that refer to the pieces of information, the association decision unit 112 estimates that the pieces of information acquired by the process at S31 are associated with each other.

Consequently, even in the case where the context ID of a context is changed or a plurality of contexts similar to a context exist, the information processing apparatus 1 may perform specification (estimation) of a context to be associated with each context.

In the case where, in the item names of the ancestor items corresponding to the one item name, an item name that matches with the other item name exists (YES at S52), the second item specification unit 114 of the information processing apparatus 1 decides whether or not, in the information acquired from the second document information 131b (second context information 133b) by the process at S31, information that is not included in the information acquired from the first document information 131a (first context information 133a) by the process at S31 is included (S53).

For example, in the first context information 133a described with reference to FIG. 18A, "date: 2016/6/15 ∼" and "product: Software" are set in "substance" to whose "context ID" "C1" is set. Further, in the second context information 133b described with reference to FIG. 18B, "date: 2017/6/29 ∼," "product: Software" and "district: Domestic" are set in "substance" of the information to whose "context ID" "C2" is set. Therefore, in this case, the second item specification unit 114 specifies "district: Domestic" as information that is included in the information acquired from the second document information 131b by the process at S31 but is not included in the information acquired from the first document information 131a by the process at S31.

If it is decided as a result of decision by the process at S53 that such information is not included (NO at S54), the association decision unit 112 performs the processes at the steps beginning with S34 again.

On the other hand, in the case where it is decided by the process at S53 that such information is not included (NO at S54), the second item specification unit 114 refers to the taxonomy information 135 stored in the information storage region 130 and decides whether or not the label of the information decided to be included by the process at S53 is included in the label of the item name specified by the process at S44 (S55).

For example, in the second taxonomy information 135b described with reference to FIG. 21, "domestic" is set in "label" of the information to whose "item name" "Domestic" is set. Therefore, in the case where the information decided to be included by the process at S53 is "district: Domestic," the second item specification unit 114 specifies "domestic" as the label of the information decided to be included by the process at S53. Further, in the first taxonomy information 135a described with reference to FIG. 20, "amount of sales" and "amount of domestic sales" are set to the labels of the information to whose "item name" "Sales" and "SalesDom" are set, respectively. Further, in "amount of domestic sales" that is the label of "SalesDom," "domestic" that is the label of "district: Domestic" is included. Therefore, in this case, the first item specification unit 113 decides that the label of the information decided to be included by the process at S53 is included in the label of the item name specified by the process at S44.

In the case where it is decided that the label of the information decided to be included by the process at S53 is included in the label of the item name specified by the process at S44 (YES at S56), the association decision unit 112 performs the processes at the steps beginning with S34 again.

For example, in this case, the association decision unit 112 decides that the pieces of information included in the combination acquired by the process at S31 are pieces of information associated with each other (same information for which change of the substance has been performed).

Consequently, it becomes possible for the association decision unit 112 to further increase the probability by which pieces of information acquired by the process at S31 match with each other.

On the other hand, in the case where it is decided that the label of the information decided to be included by the process at S53 is not included in the label of the item name specified by the process at S44 (NO at S56), the association decision unit 112 decides whether or not all combinations of item names corresponding to the context IDs of the information acquired by the process at S31 are specified already by the process at S44 (S57). Also in the case where, in the item names of the ancestor items corresponding to the one item name, an item name that matches with the other item name does not exist (YES at S52), the association decision unit 112 performs the process at S57 similarly.

As a result, in the case where it is decided that all combinations of item names corresponding to the context IDs of the information acquired at S31 are not specified as yet (NO at S57), the first item specification unit 113 performs the processes at the steps beginning with S44 again.

For example, in the first item information 134a described with reference to FIG. 19A, "SalesDom" and "SalesFor" are set in "item name" of the pieces of information whose "context ID" is "C1" (information whose "item number" is "1" and "3"). Further, in the second item information 134b described with reference to FIG. 19B, "Sales" is set in "item name" of the information whose "context ID" is "C2" (information whose "item number" is "1"). Therefore, the first item specification unit 113 specifies "SalesFor" and "Sales," for example, by the process at S44 that is performed again.

On the other hand, in the case where it is decided that all of the item names corresponding to the context IDs of the information acquired at S31 are specified already (YES at S57), the association decision unit 112 performs the processes at the steps beginning with S43.

For example, in this case, the association decision unit 112 decides that the pieces of information included in the combination acquired by the process at S31 are not pieces of information that are not associated with each other. In the following, a particular example of the match information 136 finally generated in response to execution of the decision process is performed.

### [Particular Example of Match Information Outputted by Process at S26]

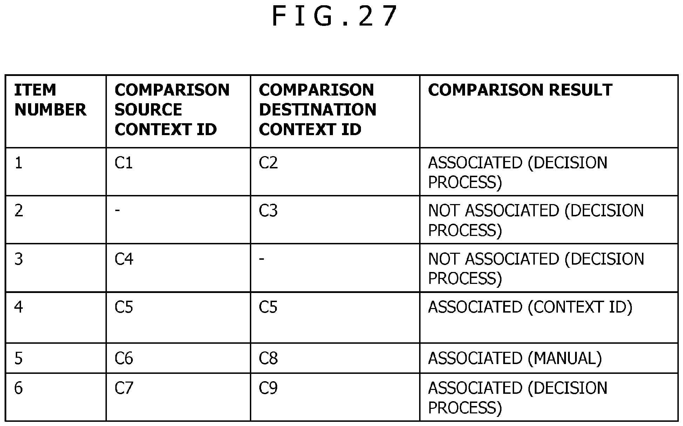

FIG. 27 is a view illustrating a particular example of the match information 136 outputted by the process at S26. For example, FIG. 27 is a view illustrating a particular example of the match information 136 finally generated in response to execution of the decision process.

For example, in the case where it is decided that a context whose context ID is "C1" and another context whose context ID is "C2" are associated with each other, the association decision unit 112 sets "associated (decision process)" indicating that it is decided by the decision process that the contexts are associated with each other to "comparison result" of the information to whose "comparison source context" and "comparison destination context" "C1" and "C2" are set (information whose "item number" is "1"), respectively, as depicted in FIG. 27.

On the other hand, for example, in the case where it is decided that contexts whose context ID is "C3" and "C4" are associated with each other, the association decision unit 112 sets "not associated (decision process)" indicating that it is decided by the decision process that the contexts are not associated with each other to "comparison result" of the information to whose "comparison destination context" "C3" is set (information whose "item number" is "2") and the information to whose "comparison source context" "C4" is set (information whose "item number" is "3") as depicted in FIG. 27.

In this manner, the information processing apparatus 1 in the present embodiment accepts a comparison source context relating to an item included in the first document information 131a and a comparison destination context relating to an item included in the second document information 131b.

Then, the information processing apparatus 1 refers to the information storage region 130, which stores information that associates the information that specifies the items included in the first document information 131a with the contexts relating to the items and the information that associates the information that specifies the items included in the second document information 131b with the contexts relating to the items, and specifies a first item associated with the comparison source context and a second item associated with the comparison destination context.

Then, the information processing apparatus 1 refers to the information storage region 130 having stored therein the information that indicates a relationship between the items included in the first document information 131a and the information that indicates a relationship between the items included in the second document information 131b and specifies a third item having a specific relationship with the first item and a fourth item having a specific relationship with the second item.

Further, the information processing apparatus 1 decides based on the consistency between the third item and the fourth item whether or not the comparison destination context is associated with the comparison source context.

For example, the information processing apparatus 1 generates, for example, from information included in the first document information 131a and the second document information 131b stored in the information storage region 130, information indicative of an item that refers to each context and information indicative of a relationship between the items. Then, the information processing apparatus 1 estimates, based on the information indicative of an item that refers to each context and information indicative of a relationship between the items, an association relationship between the comparison source context (context included in the first document information 131a) and the comparison destination context (context included in the second document information 131b).

Accordingly, it becomes possible for the information processing apparatus 1 to perform specification of a context to be associated with each context even in the case where the context ID of a context is changed or a plurality of contexts similar to a context exist.

It is to be noted that the association decision unit 112 may decide by the process at S14 that all pieces of information including pieces of information whose context IDs match with each other are not associated with each other.

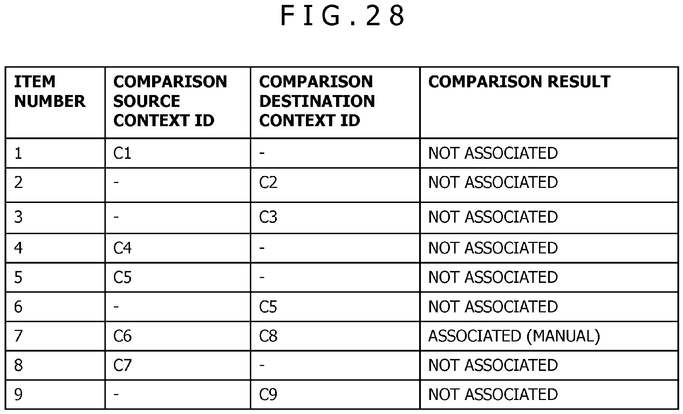

For example, the association decision unit 112 may generate even in the case where a context whose context ID is "C5" is included in both the first context information 133a and the second context information 133b as depicted in FIG. 28, information to whose "comparison source context ID" "C5" is set (information whose "item number" is "5") and information to whose "comparison destination context ID" "C5" is set (information whose "item number" is "6") and sets "not associated" to "comparison result" of both generated pieces of information.

Then, the association decision unit 112 may perform a succeeding process of the decision process in a state in which it is not finally determined that the context whose context ID is "C5" included in the first context information 133a and the context whose context ID is "C5" included in the second context information 133b are contexts associated with each other.

Consequently, it becomes possible for the information processing apparatus 1 to suppress such a situation that, for example, even in the case where context IDs of contexts that originally are not associated with each other match with each other as a result of a change of information, the contexts are associated with each other.

According to the above-mentioned embodiments, it is made possible to specify an association relationship between attributes included in documents different from each other.

## Claims

1. A computer-readable storage medium having stored therein a decision program for causing a computer to execute a process comprising:
accepting a first attribute relating to items included in a first document and a second attribute relating to items included in a second document;
specifying a first item associated with the accepted first attribute and a second item associated with the accepted second attribute by referring to a storage in which information that associates information that specifies the items included in the first document with an attribute relating to the items included in the first document and information that associates information that specifies the items included in the second document with an attribute relating to the items in the second document are stored;
specifying a third item having a specific relationship to the specified first item and a fourth item having a specific relationship to the specified second item by referring to a storage in which information indicative of a relationship between the items included in the first document and information indicative of a relationship between the items included in the second document are stored; and
deciding, based on consistency between the specified third item and the specified fourth item, whether or not the first attribute is associated with the second attribute.

2. The storage medium according to claim 1, wherein
the first item and the third item are items each included in a first hierarchical structure,
the second item and the fourth item are items each included in a second hierarchical structure,
the third item is an item associated with a hierarchy higher than that of the first item in the first hierarchical structure, and
the fourth item is an item associated with a hierarchy higher than that of the second item in the second hierarchical structure.

3. The storage medium according to claim 1, wherein in the deciding,
when the third item and the fourth item match with each other, deciding that the first attribute is associated with the second attribute.

4. The storage medium according to claim 1, wherein the process further comprising:
deciding whether or not information included in the first attribute and information included in the second attribute match with each other; and
performing, where a ratio of information that matches with information included in the second attribute from within the information included in the first attribute is equal to or higher than a predetermined ratio, a process for specifying the first item and the second item.

5. The storage medium according to claim 4, wherein the process further comprising:
deciding, where it is decided that information included in the first attribute and information included in the second attribute match with each other, that the first attribute is associated with the second attribute; and
deciding, where the ratio of information that matches with information included in the second attribute from within the information included in the first attribute is lower than the predetermined ratio, that the first attribute is not associated with the second attribute.

6. The storage medium according to claim 1, wherein the process further comprising:
outputting, where it is decided that the first attribute is associated with the second attribute, information indicating that the first attribute is associated with the second attribute, and
outputting, where it is decided that the first attribute is not associated with the second attribute, information indicating that the first attribute is not associated with the second attribute.

7. The storage medium according to claim 3, wherein
the deciding includes
deciding whether or not specific information that is not included in the second attribute from within the information included in the first attribute is included in the information that specifies the first item or in the information that specifies the second item, and
deciding that, where the third item and the fourth item match with each other and it is decided that the specific information is included in the information that specifies the first item or in the information that specifies the second item, the first attribute is associated with the second attribute.

8. A decision apparatus comprising:
an accepting unit configured to accept a first attribute relating to items included in a first document and a second attribute relating to items included in a second document;
a first specifying unit configured to specify a first item associated with the accepted first attribute and a second item associated with the accepted second attribute by referring to a storage in which information that associates information that specifies the items included in the first document with an attribute relating to the items included in the first document and information that associates information that specifies the items included in the second document with an attribute relating to the items in the second document are stored;
a second specifying unit configured to specify a third item having a specific relationship to the specified first item and a fourth item having a specific relationship to the specified second item by referring to a storage in which information indicative of a relationship between the items included in the first document and information indicative of a relationship between the items included in the second document are stored; and
a decision unit configured to decide, based on consistency between the specified third item and the specified fourth item, whether or not the first attribute is associated with the second attribute.

9. The decision apparatus according to claim 8,
wherein the decision unit decides whether or not information included in the first attribute and information included in the second attribute match with each other; and
wherein the first specifying unit performs, when a ratio of information that matches with information included in the second attribute from within the information included in the first attribute is equal to or higher than a predetermined ratio, a process for specifying the first item and the second item.

10. A decision method performed by a computer, the method comprising:
accepting a first attribute relating to items included in a first document and a second attribute relating to items included in a second document;
specifying a first item associated with the accepted first attribute and a second item associated with the accepted second attribute by referring to a storage in which information that associates information that specifies the items included in the first document with an attribute relating to the items included in the first document and information that associates information that specifies the items included in the second document with an attribute relating to the items in the second document are stored;
specifying a third item having a specific relationship to the specified first item and a fourth item having a specific relationship to the specified second item by referring to a storage in which information indicative of a relationship between the items included in the first document and information indicative of a relationship between the items included in the second document are stored; and
deciding, based on consistency between the specified third item and the specified fourth item, whether or not the first attribute is associated with the second attribute.
